# DEMANDE DE BREVET EUROPEEN

(11) **EP 3 929 080 A1**
(43) Date de publication de la demande: **29.12.2021**
(21) Numéro de dépôt: 21181371.2
(22) Date de dépôt: 24.06.2021
(51) Int. Cl.: B64D 1/16, A62C 3/02

(54) **DISPOSITIF DE LUTTE CONTRE LES INCENDIES**

(30) Priorité: 26.06.2020 FR 2006750
(71) Demandeur: Aeroconseil SA, 31700 Blagnac (FR)
(72) Inventeur: LEYMAT, Régis, 31200 TOULOUSE (FR); PONTHIEUX, Laurent, 82500 Lamothe Cumont (FR); CORNALE, Damian, 31140 Launaguet (FR); BERMUDEZ, Cécile, 31700 Blagnac (FR)
(74) Mandataire: Germain Maureau

(57) **Abrégé**

L'invention concerne un dispositif de lutte contre les incendies (2) comprenant un réservoir amovible (3) configuré pour être fixé de manière amovible dans un avion, une ouverture d'évacuation de liquide (7) qui est configurée pour être située en regard de la porte de chargement arrière de l'avion, un organe d'obturation (8) mobile entre une position d'obturation dans laquelle l'organe d'obturation (8) obture l'ouverture d'évacuation de liquide (7) et une position de libération dans laquelle l'organe d'obturation (8) libère l'ouverture d'évacuation de liquide (7), et un organe de protection (9) mobile entre une position rétractée et une position déployée dans laquelle l'organe de protection (9) est configuré pour recouvrir au moins partiellement la porte de chargement arrière de l'avion et pour protéger la porte de chargement arrière et la charnière de la porte de chargement arrière lorsque le liquide est évacué hors du réservoir amovible via l'ouverture d'évacuation de liquide (7).

## Description

### Préambule

La présente invention concerne dispositif de lutte contre les incendies.

Le document US9089725B2 divulgue un dispositif de lutte contre les incendies, comprenant :
- un réservoir amovible configuré pour être fixé de manière amovible dans un avion et pour être inséré dans l'avion via une porte de chargement arrière de l'avion, le réservoir amovible comprenant au moins un compartiment de stockage configuré pour stocker un liquide,
- une ouverture d'évacuation de liquide qui est reliée fluidiquement à l'au moins un compartiment de stockage et qui est configurée pour être située en regard de la porte de chargement arrière de l'avion lorsque le réservoir amovible est fixé dans l'avion, et
- un organe d'obturation mobile entre une position d'obturation dans laquelle l'organe d'obturation obture l'ouverture d'évacuation de liquide et empêche une évacuation de liquide à travers l'ouverture d'évacuation de liquide et une position de libération dans laquelle l'organe d'obturation libère l'ouverture d'évacuation de liquide et autorise une évacuation de liquide à travers l'ouverture d'évacuation de liquide.

Ces dispositions donnent satisfaction en ce que des avions de transport avec porte de chargement arrière peuvent transporter des composés liquides pour le traitement et contrôle des incendies; sans modification de l'avion, préservant ainsi l'intégrité d'origine et l'application de l'avion.

Toutefois, le dispositif décrit dans le document US9089725B2 s'appuie sur un conduit d'évacuation de liquide qui est relié fluidiquement à l'ouverture d'évacuation de liquide et qui est réalisé à l'aide d'un matériau flexible, le conduit d'évacuation de liquide étant déformable entre une position de stockage dans laquelle le conduit d'évacuation de liquide est replié sur lui-même et une position d'utilisation dans laquelle le conduit d'évacuation de liquide est déplié et oriente la trajectoire du liquide lors de son évacuation hors du dispositif.

Dans les avions quadrimoteurs de type A400M par exemple, l'avion est soumis à des turbulences conséquentes au niveau de la porte de chargement arrière. Ces turbulences sont susceptibles de provoquer des déformations sensibles du conduit d'évacuation de liquide qui compliquent l'évacuation du liquide par le conduit d'évacuation de liquide. En particulier, le liquide risque d'être évacué en partie au sein même de l'avion, ce qui complique notamment la lutte contre un incendie et risque d'endommager l'avion.

La présente invention a pour but de résoudre tout ou partie des inconvénients mentionnés ci-dessus.

Le problème technique à la base de l'invention consiste notamment à fournir un dispositif pour contenir un liquide destiné à être évacué qui soit de structure simple et économique, tout en assurant une évacuation optimale du liquide hors du réservoir amovible.

### Description générale

A cet effet, la présente invention a pour objet un dispositif de lutte contre les incendies, comprenant un réservoir amovible configuré pour être fixé de manière amovible dans un avion et pour être inséré dans l'avion via une porte de chargement arrière de l'avion, le réservoir amovible comprenant au moins un compartiment de stockage configuré pour stocker un liquide ; une ouverture d'évacuation de liquide qui est reliée fluidiquement à l'au moins un compartiment de stockage et qui est configurée pour être située en regard de la porte de chargement arrière de l'avion lorsque le réservoir amovible est fixé dans l'avion ; un organe d'obturation mobile entre une position d'obturation dans laquelle l'organe d'obturation obture l'ouverture d'évacuation de liquide et empêche une évacuation de liquide à travers l'ouverture d'évacuation de liquide et une position de libération dans laquelle l'organe d'obturation libère l'ouverture d'évacuation de liquide et autorise une évacuation de liquide à travers l'ouverture d'évacuation de liquide ; et un organe de protection mobile entre une position rétractée et une position déployée dans laquelle l'organe de protection est configuré pour recouvrir au moins partiellement la porte de chargement arrière de l'avion et pour protéger la porte de chargement arrière et la charnière de la porte de chargement arrière lorsque le liquide est évacué hors du réservoir amovible via l'ouverture d'évacuation de liquide.

Une telle configuration de l'organe de protection permet une évacuation optimale du liquide à travers l'ouverture d'évacuation de liquide, tout en protégeant la porte de chargement arrière de l'avion lorsque le liquide est évacué hors du réservoir amovible. Le dispositif selon la présente invention permet dont de préserver l'intégrité de l'avion.

Le dispositif de lutte contre les incendies peut en outre présenter une ou plusieurs des caractéristiques suivantes, prises seules ou en combinaison.

Selon un mode de réalisation, le dispositif de lutte contre les incendies est configuré de telle sorte que, lorsque l'organe d'obturation est dans la position de libération, le liquide contenu dans le compartiment de stockage est évacué via l'ouverture d'évacuation de liquide par gravité, c'est-à-dire sans système d'aide à l'évacuation du liquide, tel qu'une pompe ou similaire.

Selon un mode de réalisation, le dispositif de lutte contre les incendies est configuré de telle sorte que, lorsque l'organe d'obturation est dans la position de libération, le liquide contenu dans le compartiment de stockage est évacué via l'ouverture d'évacuation de liquide dans une durée d'évacuation inférieure à 15 secondes, et ce afin d'avoir une évacuation avec un effet masse.

Selon un mode de réalisation, l'organe de protection est également configuré pour recouvrir au moins partiellement une charnière de la porte de chargement arrière lorsque l'organe de protection occupe la position déployée.

Selon un mode de réalisation, l'ouverture d'évacuation de liquide est ménagée sur une face d'extrémité du réservoir amovible.

Lorsqu'il occupe la position déployée, l'organe de protection est avantageusement configuré pour guider le liquide évacué à travers l'ouverture d'évacuation de liquide et pour orienter le liquide selon une direction d'évacuation.

L'organe de protection peut être monté articulé, par exemple sur le réservoir amovible, autour d'un axe d'articulation.

Selon un mode de réalisation, l'organe de protection est configuré pour être déplacé dans la position déployée par gravité lors d'une ouverture de la porte de chargement arrière de l'avion.

Selon un autre mode de réalisation, l'organe de protection est configuré pour être fixé à la porte de chargement arrière de l'avion et pour être déplacé dans la position déployée lors d'une ouverture de la porte de chargement arrière de l'avion.

L'organe de protection peut comporter une paroi de recouvrement configurée pour recouvrir au moins partiellement la porte de chargement arrière et deux parois latérales disposées de part et d'autre de la paroi de recouvrement.

Selon un mode de réalisation de l'invention, les deux parois latérales de l'organe de protection s'étendent au moins partiellement le long de deux parois latérales opposées du réservoir amovible lorsque l'organe de protection occupe la position rétractée.

Selon une possibilité, l'organe de protection possède une section transversale en U.

Selon un mode de réalisation de l'invention, l'organe de protection est configuré pour recouvrir l'organe d'obturation lorsque l'organe de protection occupe la position rétractée.

Selon un mode de réalisation, le dispositif de lutte contre les incendies comprend des moyens de remplissage configurés pour permettre un remplissage de l'au moins un compartiment de stockage avec du liquide.

Selon une possibilité, les moyens de remplissage sont configurés pour permettre un remplissage du réservoir amovible lorsque le réservoir amovible est fixé à l'intérieur de l'avion.

Selon un mode de réalisation, les moyens de remplissage comprennent une ouverture de remplissage configurée pour être située en regard de la porte de chargement arrière de l'avion, ou de toute autre porte d'accès de l'avion, lorsque le réservoir amovible est fixé dans l'avion.

Selon un mode de réalisation, les moyens de remplissage comprennent au moins un tuyau de remplissage relié fluidiquement à l'au moins un compartiment de stockage, l'au moins un tuyau de remplissage comportant au moins un orifice d'alimentation débouchant dans l'au moins un compartiment de stockage.

Selon un mode de réalisation de l'invention, l'au moins un tuyau de remplissage s'étend au moins partiellement dans l'au moins un compartiment de stockage.

Selon un autre mode de réalisation de l'invention, l'au moins un tuyau de remplissage s'étend à l'extérieur de l'au moins un compartiment de stockage.

Selon un mode de réalisation de l'invention, l'au moins un tuyau de remplissage comprend l'ouverture de remplissage.

Selon un mode de réalisation, l'au moins un tuyau de remplissage s'étend le long de l'au moins un compartiment de stockage.

Le réservoir amovible peut comprendre au moins une paroi de cloisonnement s'étendant dans l'au moins un compartiment de stockage et configurée pour limiter les mouvements du liquide contenu dans l'au moins un compartiment de stockage.

De manière avantageuse, l'au moins une paroi de cloisonnement présente une surface de cloisonnement inférieure à la section transversale de l'au moins un compartiment de stockage.

Selon un mode de réalisation de l'invention, l'au moins une paroi de cloisonnement s'étend uniquement sur une partie de la hauteur de l'au moins un compartiment de stockage.

Selon un mode de réalisation de l'invention, l'au moins une paroi de cloisonnement s'étend dans une moitié supérieure de l'au moins un compartiment de stockage.

Selon un mode de réalisation de l'invention, le dispositif de lutte contre les incendies comporte une pluralité de parois de cloisonnement qui s'étendent sensiblement parallèlement les unes par rapport aux autres.

Selon un mode de réalisation, l'organe d'obturation est monté pivotant autour d'un axe de pivotement.

Selon un mode de réalisation, la position de libération de l'organe d'obturation est réglable de manière à limiter ou régler mécaniquement le débit de liquide s'écoulant à travers l'ouverture d'évacuation de liquide lorsque l'organe d'obturation occupe la position de libération. Ces dispositions permettent de pourvoir régler ou limiter de manière aisée le débit de liquide s'écoulant à travers l'ouverture d'évacuation de liquide.

Selon un mode de réalisation, un angle d'ouverture de l'organe d'obturation est réglable. Un tel angle d'ouverture correspond à l'angle défini par l'organe d'ouverture lorsqu'il occupe la position d'obturation et l'organe d'ouverture lorsqu'il occupe la position de libération.

Selon un mode de réalisation, le dispositif de lutte contre les incendies comporte un mécanisme d'actionnement configuré pour actionner un déplacement de l'organe d'obturation entre les positions de libération et d'obturation.

Selon une possibilité, le mécanisme d'actionnement est configuré pour régler la position de libération de l'organe d'obturation, et plus particulièrement l'angle d'ouverture de l'organe d'obturation.

Selon un mode de réalisation, le mécanisme d'actionnement comporte un levier d'actionnement.

Selon une possibilité, le levier d'actionnement est configuré pour être actionné manuellement par un opérateur.

Selon un mode de réalisation, le dispositif de lutte contre les incendies comporte une unité de commande configurée pour commander à distance le mécanisme d'actionnement, par exemple depuis le cockpit de l'avion ou depuis une station de travail située dans une zone de chargement de l'avion où est situé le réservoir.

Selon un mode de réalisation, l'organe de protection est configuré pour être déplacé dans la position déployée de manière concomitante à l'ouverture de la porte de chargement arrière de l'avion.

Selon un mode de réalisation, le dispositif de lutte contre les incendies comporte des moyens de roulement attachés au réservoir amovible et configurés pour rouler sur le sol.

Selon un mode de réalisation, les moyens de roulement attachés au réservoir amovible comportent des roues.

Selon un mode de réalisation, les roues sont mobiles entre une position active, également nommée position de roulement, dans laquelle les roues font saillie d'une surface inférieure du réservoir amovible et sont configurées pour rouler sur le sol, et une position inactive dans laquelle les roues sont situées en retrait de la surface inférieure du réservoir amovible ou affleurent ladite surface inférieure. Ces dispositions permettent d'empêcher un déplacement du réservoir amovible lorsque les roues occupent la position inactive.

Selon un mode de réalisation, les roues sont déplaçables verticalement.

Selon un mode de réalisation, le dispositif de lutte contre les incendies comporte un mécanisme de déplacement configuré pour déplacer les roues entre la position active et la position inactive.

Selon un mode de réalisation, le réservoir amovible est destiné à contenir un liquide aqueux, tel que de l'eau ou un mélange aqueux. De façon avantageuse, le réservoir amovible est destiné à contenir un liquide de lutte contre les incendies, tel que de l'eau ou un retardant.

Selon une possibilité, le réservoir amovible peut comprendre deux compartiments de stockage reliés l'un à l'autre par une liaison fluidique, et par exemple par une ouverture de liaison.

Selon un exemple, le réservoir amovible est configuré pour être fixé dans un avion de type A400M, de type CASA, de type C130, de type KC390, ou encore de type C27J ou tout autre type d'avion ayant une porte de chargement arrière, également nommé porte cargo arrière centrale.

Selon un mode de réalisation, l'organe de protection est configuré pour orienter la trajectoire du liquide lors de son évacuation à travers l'ouverture d'évacuation de liquide.

Selon une possibilité, l'évacuation du liquide se fait en fonction d'au moins un paramètre parmi une pluralité de paramètres comprenant une vitesse de l'avion, une accélération de l'avion, un angle d'attaque de l'avion, un effet de la pesanteur et une vitesse du vent.

Selon un mode de réalisation, l'organe de protection est rigide ou semi-rigide, et peut par exemple être métallique.

Selon un mode de réalisation, le dispositif de lutte contre les incendies comporte un système d'évent comprenant une ouverture d'évent qui est reliée fluidiquement à l'au moins un compartiment de stockage, et un organe de fermeture, tel qu'un volet de fermeture, mobile entre une position d'ouverture dans laquelle l'organe de fermeture libère l'ouverture d'évent et permet une entrée d'air au sein du réservoir amovible, et plus particulièrement au sein de l'au moins un compartiment de stockage, et une position de fermeture dans laquelle l'organe de fermeture ferme l'ouverture d'évent et empêche une évacuation de liquide à travers l'ouverture d'évent.

Selon un mode de réalisation, l'organe de fermeture est configuré pour être déplacé dans la position d'ouverture par gravité. Par exemple, l'organe de fermeture peut être configuré pour flotter sur le liquide contenu dans l'au moins un compartiment de stockage, et pour être déplacé dans la position d'ouverture lorsque le niveau de liquide dans l'au moins un compartiment de stockage est inférieur à un niveau de liquide seuil.

### Description en référence aux figures

L'invention sera mieux comprise à l'aide de la description détaillée qui est exposée ci-dessous en regard des dessins annexés dans lesquels :
Dans la description détaillée qui va suivre des figures définies ci-dessus, les mêmes éléments ou les éléments remplissant des fonctions identiques pourront conserver les mêmes références de manière à simplifier la compréhension de l'invention.
La figure 1 est une vue schématique montrant un remorquage d'un dispositif selon la présente invention dans un avion.
La figure 2 est une vue schématique montrant le dispositif de la figure 1 inséré dans l'avion et en cours de remplissage avec un liquide provenant d'un véhicule de remplissage de liquide.
La figure 3 est une vue en perspective du dispositif des figures 1 et 2 montrant un organe de protection appartenant au dispositif dans une position rétractée.
La figure 4 est une vue en perspective, tronquée longitudinalement, du dispositif de la figure 3 montrant l'organe de protection et des organes d'obturation respectivement dans la position rétractée et dans des positions d'obturation.
La figure 5 est une vue en perspective du dispositif de la figure 3 montrant l'organe de protection et l'un des organes d'obturation respectivement dans une position déployée et dans une position de libération.
La figure 6 est une vue en perspective, tronquée longitudinalement, du dispositif de la figure 3 montrant l'organe de protection dans la position déployée et les organes d'obturation dans les positions de libération.
La figure 7 est une vue en perspective, tronquée longitudinalement, du dispositif de la figure 3 montrant plus particulièrement un tuyau de remplissage appartenant au dispositif.
La figure 8 est une vue en perspective, tronquée transversalement, du dispositif de la figure 3.

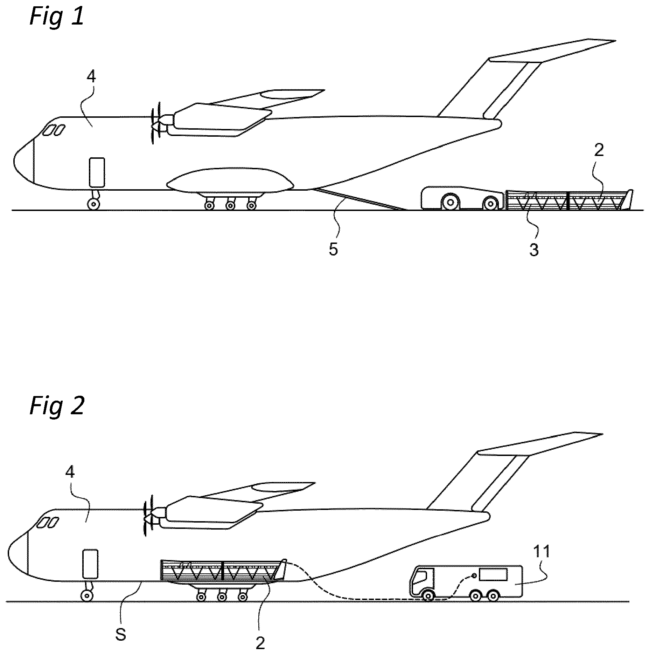

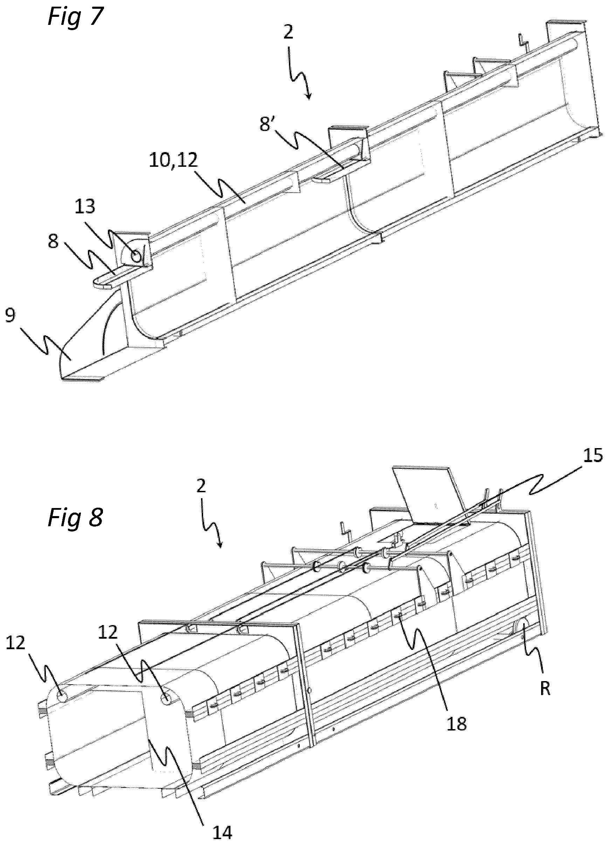

Les figures 1 à 8 représentent un dispositif de lutte contre les incendies 2 configuré pour contenir un liquide destiné à être évacué.

Le dispositif de lutte contre les incendies 2 comprend un réservoir amovible 3 configuré pour être fixé de manière amovible dans un avion 4 et pour être inséré dans l'avion 4 via une porte de chargement arrière 5 de l'avion, comme présenté à la figure 1.

Le réservoir amovible 3 comprend un ou plusieurs compartiment(s) de stockage configuré(s) pour stocker un liquide, et plus particulièrement un liquide aqueux, tel que de l'eau ou un mélange aqueux. De façon avantageuse, le réservoir amovible 3 est destiné à contenir un liquide de lutte contre les incendies, tel que de l'eau ou un retardant. Selon le mode de réalisation représenté sur les figures, le réservoir amovible 3 comprend deux compartiments de stockage 6, 6' reliés l'un à l'autre par une liaison fluidique, et par exemple par une ouverture de liaison 7'. Cependant, le réservoir amovible 3 pourrait comporter uniquement un compartiment de stockage, ou plus de deux compartiments de stockage, et par exemple trois ou quatre compartiments de stockage.

De façon avantageuse, les deux compartiments de stockage 6, 6' sont alignés selon une direction d'extension du réservoir amovible 3.

Le dispositif de lutte contre les incendies comprend en outre des moyens de roulement attachés au réservoir amovible et configurés pour rouler sur le sol. Selon un mode de réalisation, les moyens de roulement comportent des roues R, et par exemple quatre roues disposés aux quatre coins du réservoir amovible.

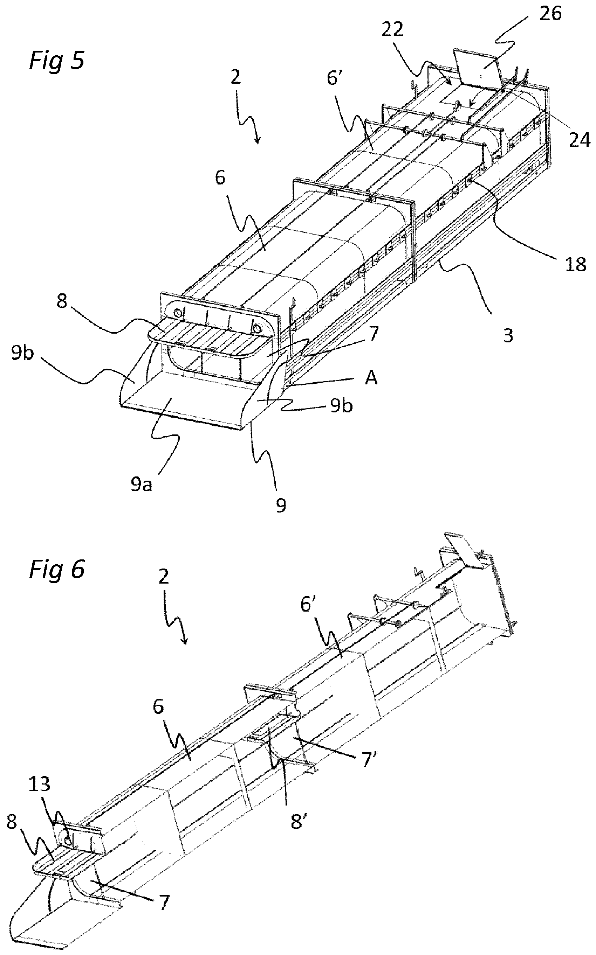

Comme montré sur les figures 5 à 7, le dispositif de lutte contre les incendies 2 comprend également une ouverture d'évacuation de liquide 7 qui est reliée fluidiquement aux compartiments de stockage 6, 6' et qui est configurée pour être située en regard de la porte de chargement arrière 5 de l'avion 4 lorsque le réservoir amovible 3 est fixé dans l'avion 4. De façon avantageuse, l'ouverture d'évacuation de liquide 7 débouche dans le compartiment de stockage 6, et est ménagée sur une face d'extrémité du réservoir amovible 3.

Le dispositif de lutte contre les incendies 2 comprend de plus un organe d'obturation 8 mobile entre une position d'obturation dans laquelle l'organe d'obturation 8 obture l'ouverture d'évacuation de liquide 7 et empêche une évacuation de liquide à travers l'ouverture d'évacuation de liquide 7, et une position de libération dans laquelle l'organe d'obturation 8 libère l'ouverture d'évacuation de liquide 7 et autorise une évacuation de liquide à travers l'ouverture d'évacuation de liquide 7.

L'organe d'obturation 8 peut être monté pivotant autour d'un axe de pivotement, qui peut par exemple être sensiblement horizontal lorsque le réservoir amovible est disposé sur un support plan et s'étendre transversalement à la direction d'extension du réservoir amovible.

Le dispositif de lutte contre les incendies 2 comprend également un organe d'obturation additionnel 8' mobile entre une position d'obturation dans laquelle l'organe d'obturation additionnel 8' obture l'ouverture de liaison 7' et empêche un écoulement de liquide à travers l'ouverture de liaison 7', et une position de libération dans laquelle l'organe d'obturation additionnel 8' libère l'ouverture de liaison 7' et autorise un écoulement de liquide à travers l'ouverture de liaison 7'.

Le dispositif de lutte contre les incendies 2 comprend un organe de protection 9 mobile entre une position rétractée et une position déployée dans laquelle l'organe de protection 9 est configuré pour recouvrir au moins partiellement la porte de chargement arrière 5 de l'avion 4, et également la charnière de la porte de chargement arrière, et pour protéger la porte de chargement arrière 5 lorsque le liquide est évacué hors du réservoir amovible 3 via l'ouverture d'évacuation de liquide 7.

De façon avantageuse, l'organe de protection 9 peut être configuré pour être déplacé dans la position déployée par gravité lors d'une ouverture de la porte de chargement arrière 5 de l'avion. L'organe de protection 9 est ainsi configuré pour être déplacé dans la position déployée de manière concomitante à l'ouverture de la porte de chargement arrière 5 de l'avion.

Lorsqu'il occupe la position déployée comme dans les figures 5 et 6, l'organe de protection 9 est avantageusement configuré pour guider le liquide évacué à travers l'ouverture d'évacuation de liquide 7 et pour orienter le liquide selon une direction d'évacuation et en direction d'une ouverture arrière de l'avion configurée pour être obturée par la porte de chargement arrière 5.

Selon une possibilité, l'organe de protection 9 est monté articulé autour d'un axe d'articulation A, qui est avantageusement sensiblement horizontal lorsque le réservoir amovible 3 est disposé sur un support plan et qui s'étend avantageusement transversalement à la direction d'extension du réservoir amovible.

Selon un mode de réalisation de l'invention, l'axe d'articulation A s'étend le long d'un bord transversal inférieur du réservoir amovible, et est par exemple situé à proximité du bord transversal inférieur du réservoir amovible.

Selon un mode de réalisation, l'organe de protection 9 comporte une paroi de recouvrement 9a, par exemple globalement plane, configurée pour recouvrir au moins partiellement la porte de chargement arrière, et deux parois latérales 9b, par exemple globalement planes, disposées de part et d'autre de la paroi de recouvrement, comme le montre la figure 5. De façon avantageuse, les deux parois latérales s'étendent sensiblement perpendiculairement à la paroi de recouvrement. Toutefois, les deux parois latérales pourraient divergées l'une par rapport à l'autre.

Selon une possibilité, l'organe de protection possède une section transversale en U ou globalement en U.

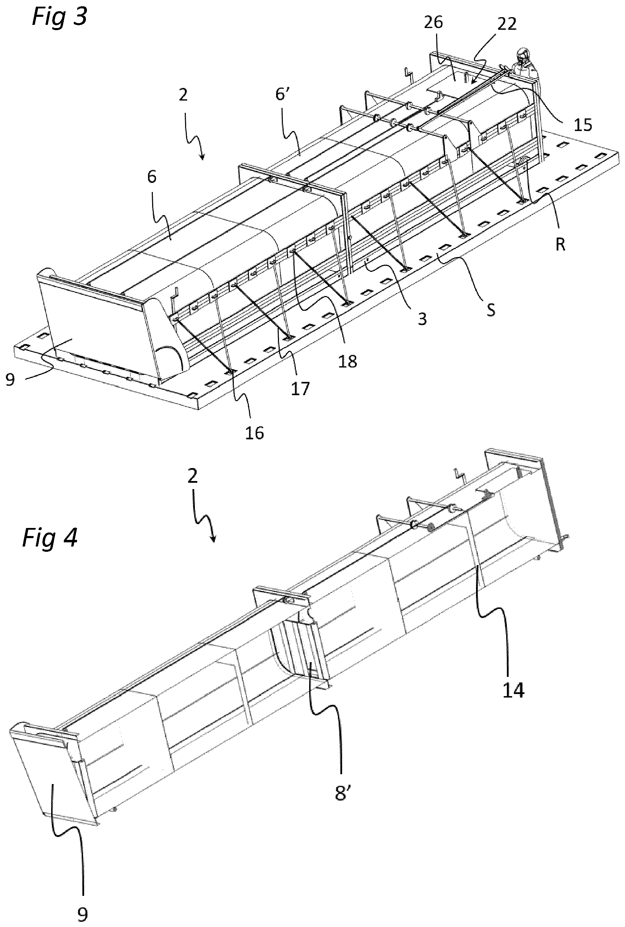

Selon le mode de réalisation représenté sur les figures et comme montré sur la figure 4, l'organe de protection 9 est configuré pour recouvrir l'organe d'obturation 8 lorsque l'organe de protection 9 occupe la position rétractée.

Le dispositif de lutte contre les incendies peut comprendre en outre des moyens de remplissage 10 configurés pour être reliés à une source de liquide, par exemple prévue sur un véhicule de remplissage de liquide 11, et pour permettre un remplissage de l'au moins un compartiment de stockage avec du liquide. Selon le mode de réalisation représenté sur les figures, les moyens de remplissage 10 comprennent un ou plusieurs tuyau(x) de remplissage 12 relié(s) fluidiquement aux compartiments de stockage.

Comme montré sur la figure 2, les moyens de remplissage 10 sont plus particulièrement configurés pour permettre un remplissage du réservoir amovible 3 lorsque le réservoir amovible 3 est fixé à l'intérieur de l'avion 4. A cet effet, le ou chaque tuyau de remplissage 12 comprend une ouverture de remplissage 13 configurée pour être située en regard de la porte de chargement arrière de l'avion lorsque le réservoir amovible 3 est fixé dans l'avion.

Selon un mode de réalisation de l'invention, le ou chaque tuyau de remplissage 12 s'étend le long des compartiments de stockage 6, 6' et au moins partiellement dans les compartiments de stockage.

Le ou chaque tuyau de remplissage 12 comporte des orifices d'alimentation débouchant dans les compartiments de stockage 6, 6'. De manière avantageuse, les orifices d'alimentation sont régulièrement répartis le long du tuyau de remplissage respectif. Ces dispositions permettent de remplir le réservoir amovible de manière homogène.

De manière avantageuse, le réservoir amovible 3 comprend au moins une paroi de cloisonnement 14 (visible sur les figures 4, 6 et 7) s'étendant dans chaque compartiment de stockage et configurée pour limiter les mouvements du liquide contenu dans ledit compartiment de stockage.

De manière avantageuse, chaque paroi de cloisonnement 14 présente une surface de cloisonnement inférieure à la section transversale du compartiment de stockage respectif. Chaque paroi de cloisonnement 14 peut par exemple comporter une première partie de paroi s'étendant sur sensiblement toute la hauteur du compartiment de stockage respectif, et une deuxième partie de paroi s'étendant sur uniquement une partie de la hauteur du compartiment de stockage respectif, et par exemple uniquement sur une partie supérieure du compartiment de stockage respectif.

Selon le mode de réalisation représenté sur les figures, le dispositif de lutte contre les incendies 2 comporte une pluralité de parois de cloisonnement 14 disposées dans le compartiment de stockage 6 et une pluralité de parois de cloisonnement 14 disposées dans le compartiment de stockage 6'. Les différentes parois de cloisonnement 14 s'étendent avantageusement sensiblement parallèlement les unes par rapport aux autres.

Le dispositif de lutte contre les incendies 2 peut comporter un mécanisme d'actionnement 15 configuré pour actionner un déplacement de l'organe d'obturation 8 entre les positions de libération et d'obturation, et avantageusement également pour actionner un déplacement de l'organe d'obturation additionnel 8' entre les positions de libération et d'obturation. Selon un mode de réalisation, le mécanisme d'actionnement 15 comporte un levier d'actionnement, et par exemple un levier d'actionnement configuré pour être actionné manuellement par un opérateur.

Le dispositif de lutte contre les incendies 2 peut en outre comporter un système d'évent 22 comprenant une ouverture d'évent 24 qui est reliée fluidiquement à l'un des compartiments de stockage 6, 6' et qui est par exemple prévue sur une face supérieure dudit compartiment de stockage, et un organe de fermeture 26, tel qu'un volet de fermeture, mobile entre une position d'ouverture dans laquelle l'organe de fermeture 26 libère l'ouverture d'évent 24 et permet une entrée de l'air au sein du réservoir amovible 3, et plus particulièrement au sein des compartiments de stockage 6, 6', et une position de fermeture dans laquelle l'organe de fermeture 26 ferme l'ouverture d'évent 24 et empêche une évacuation de liquide à travers l'ouverture d'évent 24.

Selon un mode de réalisation, le mécanisme d'actionnement 15 est relié à l'organe de fermeture 26 et est donc configuré pour déplacer l'organe de fermeture 26 entre les positions d'ouverture et de fermeture. Selon le mode de réalisation représenté sur les figures, l'organe de fermeture 26 est configuré pour être déplacé vers la position d'ouverture en pivotant vers le haut.

Selon un autre mode de réalisation non représenté sur les figures, l'organe de fermeture 26 est configuré pour être déplacé dans la position d'ouverture par gravité. L'organe de fermeture 26 peut par exemple être pourvu d'un ou de plusieurs flotteurs et être configuré pour flotter sur le liquide contenu dans l'un des compartiments de stockage. Selon un tel mode de réalisation, l'organe de fermeture 26 est configuré pour être déplacé dans la position d'ouverture lorsque le niveau de liquide dans le compartiment de stockage respectif est inférieur à un niveau de liquide seuil, et pour être déplacé dans la position de fermeture lorsque le niveau de liquide dans le compartiment de stockage respectif est supérieur à un niveau de liquide seuil.

Selon une possibilité, le dispositif de lutte contre les incendies 2 comprend des moyens de fixation configurés pour fixer de manière amovible le réservoir amovible 3 à l'avion 4, et plus particulièrement à des points de fixation 16 prévus sur l'avion, et notamment sur le sol S de l'avion. Les points de fixation 16 prévus sur l'avion peuvent par exemple comporter des crochets de fixation.

Les moyens de fixation peuvent comprendre des organes de fixation souples 17, tels que des chaines de fixations ou des sangles de fixation, configurés pour être fixés à des points de fixation 16, et des crochets de réservoir 18 installés sur le réservoir amovible 3 et sur lesquels les chaines de fixation 17 peuvent être fixées.

Selon un mode de réalisation, les crochets de réservoir 18 sont régulièrement espacés les uns des autres et sont disposés sur les côtés latéraux du réservoir amovible 3.

Selon un exemple, une première extrémité d'une chaine de fixation 17 est fixée à un premier crochet de réservoir 18, la chaine de fixation est ensuite insérée dans un crochet de fixation et une deuxième extrémité de la chaine de fixation 17 est ensuite fixée à un deuxième crochet de réservoir 18.

Un exemple de procédé d'évacuation du liquide contenu dans le réservoir amovible 3 d'un dispositif de lutte contre les incendies 2 selon l'invention disposé dans un avion 4 va maintenant être décrit.

Un tel procédé d'évacuation comprenant en particulier les étapes suivantes : une ouverture de la porte de chargement arrière 5 de l'avion 4, un basculement concomitant de l'organe de protection 9 de sa position rétractée à sa position déployée, un déplacement de l'organe d'obturation 8 de sa position d'obturation à sa position de libération sous l'action, par un opérateur, du mécanisme d'actionnement 15, et une évacuation du liquide contenu dans le compartiment de stockage 6 à travers l'ouverture d'évacuation de liquide 7.

Si nécessaire, le procédé d'évacuation comprend en outre les étapes suivantes : un déplacement de l'organe d'obturation 8' de sa position d'obturation à sa position de libération sous l'action, par un opérateur, du mécanisme d'actionnement 15, et une évacuation du liquide contenu dans le compartiment de stockage 6' à travers l'ouverture d'évacuation de liquide 7.

Selon une possibilité, le liquide évacué à travers l'ouverture d'évacuation de liquide 7 est ensuite guidé et orienté par l'organe de protection 9 selon une direction d'évacuation.

Selon une possibilité, l'évacuation du liquide, et plus particulièrement la commande de l'ouverture de la porte de chargement arrière 5, et donc du déplacement de l'organe de protection 9 dans sa position déployée, se fait en fonction d'au moins un paramètre parmi une pluralité de paramètres comprenant une vitesse de l'avion, une accélération de l'avion, un angle d'attaque de l'avion, un effet de la pesanteur et une vitesse du vent.

Selon un mode de réalisation non représenté sur les figures, le ou les tuyau(x) de remplissage 12 pourrai(en)t être s'étendre à l'extérieur des compartiments de stockage 6, 6', et pourrai(en)t comporter un unique orifice d'alimentation débouchant dans l'un des compartiments de stockage 6, 6'.

Selon un mode de réalisation non représenté sur les figures, chaque paroi de cloisonnement pourrait s'étendre uniquement sur une partie de la hauteur du compartiment de stockage respectif, et par exemple uniquement dans une moitié supérieure du compartiment de stockage respectif.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif de lutte contre les incendies (2) pour contenir un liquide destiné à être évacué, le dispositif de lutte contre les incendies (2) comprenant :
- un réservoir amovible (3) configuré pour être fixé de manière amovible dans un avion (4) et pour être inséré dans l'avion via une porte de chargement arrière (5) de l'avion (4), le réservoir amovible (3) comprenant au moins un compartiment de stockage (6) configuré pour stocker un liquide,
- une ouverture d'évacuation de liquide (7) qui est reliée fluidiquement à l'au moins un compartiment de stockage (6) et qui est configurée pour être située en regard de la porte de chargement arrière (5) de l'avion (4) lorsque le réservoir amovible (3) est fixé dans l'avion (4),
- un organe d'obturation (8) mobile entre une position d'obturation dans laquelle l'organe d'obturation (8) obture l'ouverture d'évacuation de liquide (7) et empêche une évacuation de liquide à travers l'ouverture d'évacuation de liquide (7) et une position de libération dans laquelle l'organe d'obturation (8) libère l'ouverture d'évacuation de liquide (7) et autorise une évacuation de liquide à travers l'ouverture d'évacuation de liquide (7), et
- un organe de protection (9) mobile entre une position rétractée et une position déployée dans laquelle l'organe de protection (9) est configuré pour recouvrir au moins partiellement la porte de chargement arrière (5) de l'avion (4) et pour protéger la porte de chargement arrière (5) et la charnière de la porte de chargement arrière (5) lorsque le liquide est évacué hors du réservoir amovible (3) via l'ouverture d'évacuation de liquide (7).

2. Dispositif de lutte contre les incendies (2) selon la revendication 1, dans lequel l'organe de protection (9) est monté articulé autour d'un axe d'articulation (A).

3. Dispositif de lutte contre les incendies (2) selon la revendication 1 ou 2, dans lequel l'organe de protection (9) est configuré pour être déplacé dans la position déployée par gravité lors d'une ouverture de la porte de chargement arrière (5) de l'avion (4).

4. Dispositif de lutte contre les incendies (2) selon l'une quelconque des revendications 1 à 3, dans lequel l'organe de protection (9) comporte une paroi de recouvrement (9a) configurée pour recouvrir au moins partiellement la porte de chargement arrière (5) et deux parois latérales (9b) disposées de part et d'autre de la paroi de recouvrement (9a).

5. Dispositif de lutte contre les incendies (2) selon l'une quelconque des revendications 1 à 4, comprenant des moyens de remplissage (10) configurés pour permettre un remplissage de l'au moins un compartiment de stockage (6) avec du liquide.

6. Dispositif de lutte contre les incendies (2) selon la revendication 5, dans lequel les moyens de remplissage (10) comprennent une ouverture de remplissage (13) configurée pour être située en regard de la porte de chargement arrière (5) de l'avion (4) lorsque le réservoir amovible (3) est fixé dans l'avion.

7. Dispositif de lutte contre les incendies (2) selon la revendication 5 ou 6, dans lequel les moyens de remplissage (10) comprennent au moins un tuyau de remplissage (12) relié fluidiquement à l'au moins un compartiment de stockage (6), l'au moins un tuyau de remplissage (12) comportant au moins orifice d'alimentation débouchant dans l'au moins un compartiment de stockage (6).

8. Dispositif de lutte contre les incendies (2) selon l'une quelconque des revendications précédentes, dans lequel le réservoir amovible (3) comprend au moins une paroi de cloisonnement (14) s'étendant dans l'au moins un compartiment de stockage (6) et configurée pour limiter les mouvements du liquide contenu dans l'au moins un compartiment de stockage (6).

9. Dispositif de lutte contre les incendies (2) selon l'une quelconque des revendications 1 à 8, dans lequel l'organe d'obturation (8) est monté pivotant autour d'un axe de pivotement.

10. Dispositif de lutte contre les incendies (2) selon l'une quelconque des revendications 1 à 9, lequel comporte un mécanisme d'actionnement (15) configuré pour actionner un déplacement de l'organe d'obturation (8) entre les positions de libération et d'obturation.

11. Dispositif de lutte contre les incendies (2) selon l'une quelconque des revendications 1 à 10, lequel comporte un système d'évent comprenant une ouverture d'évent qui est reliée fluidiquement à l'au moins un compartiment de stockage (6), et un organe de fermeture mobile entre une position d'ouverture dans laquelle l'organe de fermeture libère l'ouverture d'évent et permet une entrée d'air au sein de l'au moins un compartiment de stockage, et une position de fermeture dans laquelle l'organe de fermeture ferme l'ouverture d'évent et empêche une évacuation de liquide à travers l'ouverture d'évent.
